# EUROPÄISCHE PATENTSCHRIFT

(11) **EP 3 353 609 B1**
(45) Veröffentlichungstag und Bekanntmachung des Hinweises auf die Patenterteilung: **22.12.2021**
(21) Anmeldenummer: 17702053.4
(22) Anmeldetag: 25.01.2017
(51) Int. Cl.: G05B 19/042, H04L 29/08, G05B 19/418

(54) **MODUL FÜR EINE TECHNISCHE ANLAGE, SYSTEM UND VERFAHREN ZUR DURCHFÜHRUNG EINES TECHNISCHEN PROZESSES**
MODULE FOR A TECHNICAL INSTALLATION, SYSTEM AND METHOD FOR CARRYING OUT A TECHNICAL PROCESS
MODULE POUR UNE INSTALLATION TECHNIQUE, SYSTÈME ET PROCÉDÉ POUR METTRE EN OUVRE UN PROCESSUS TECHNIQUE

(30) Priorität: 26.01.2016 DE 102016201075
(43) Veröffentlichungstag der Anmeldung: 01.08.2018
(73) Patentinhaber: WAGO Verwaltungsgesellschaft mbH, 32423 Minden (DE)
(72) Erfinder: ALBERS, Thomas, 32427 Minden (DE); HOLM, Thomas, 31655 Stadthagen (DE)
(74) Vertreter: Lang, Johannes
(86) Internationale Anmeldenummer: PCT/EP2017/051518
(87) Internationale Veröffentlichungsnummer: WO 2017/129604

(56) Entgegenhaltungen:
- WO-A1-2009/053472
- Wago: "DIMA - Dezentrale Intelligenz für modulare Anlagen", , 31. Dezember 2015 (2015-12-31), Seiten 1-8, XP055355896, Gefunden im Internet: URL:http://www.dima-process.com/wp-content /uploads/2015/12/WHITEPAPER_Technische_Loe sung_fuer_die_Automatisierung_modularer_An lagen.pdf [gefunden am 2017-03-17]
- Wago: "DIMA", , 20. März 2017 (2017-03-20), Seiten 1-2, XP055356602, Gefunden im Internet: URL:http://www.dima-process.com/ [gefunden am 2017-03-20]

## Beschreibung

### 1. Gebiet der Erfindung

Die vorliegende Erfindung betrifft technische Anlagen und deren Steuerung. Insbesondere betrifft die vorliegende Erfindung modular aufbaubare prozess- und produktionstechnische Anlagen sowie ein System und ein Verfahren zur Durchführung eines technischen Prozesses.

### 2. Stand der Technik

In der Prozessindustrie, insbesondere in der Chemie, Pharmazie und Nahrungsmittelherstellung, sind die nachgefragten Produktmengen zunehmend schwerer prognostizierbar und schwanken regional abhängig in kurzfristigen Zeitabständen. Zudem werden die Produktlebenszyklen durch die globale Verfügbarkeit von Alternativen insgesamt immer kürzer.

Herkömmliche Produktionsanlagen sind jedoch oft auf diese schwankenden Produktmengen nicht ausgelegt. Kontinuierlich betriebenen Anlagen sind meist auf eine bestimmte Produktmenge pro Zeiteinheit hin optimiert und können auch nur effektiv mit dieser Produktionsrate betrieben werden. Gewöhnliche Anlagen für einen Batchbetrieb sind weniger effizient und erfordern viele unproduktive Zeiten, zum Beispiel Reinigungszeiten oder Umrüstzeiten.

Bei einer Ergänzung oder Umrüstung der Anlage ist es in der Regel notwendig, auch die entsprechende Anlagensteuerung umzukonfigurieren oder umzuprogrammieren. Dies ist ein aufwendiger Prozess, der zeitlich oft vergleichbar ist mit der hardwaremäßigen Umrüstung. Erschwert wird dies durch eine möglichweise unzureichende Dokumentation der bestehenden Steuerungssoftware oder veraltete Steuerungshardware, die die für die neue Hardware benötigten Funktionen möglicherweise nicht ausreichend bereitstellt.

Neuere Entwicklungen in der Prozessindustrie beschäftigen sich mit modularen Anlagenkonzepten, bei denen die Anlage aus einzelnen vorgefertigten Modulen aufgebaut ist. Derartige Konzepte und ihre Herausforderungen werden in einer Umfrage *"*Modulare Anlagenkonzeption und Automatisierung mithilfe des F3-Projektes" von Dipl.-Ing. Sabine Mühlenkamp / Wolfgang Ernhofer, 10.05.2012, in "Process*"* beschrieben. Auch hierin wird die steuerungstechnische Integration der Module als noch offene Frage angesehen.

Entsprechende modulare Konzepte sind auch auf andere Produktionsprozesse, z.B. für die Produktion von Konsumgütern, industriellen Produkten, etc. übertragbar.

Bei solchen modularen Konzepten stellt jedes Anlagenmodul seine verfahrenstechnische oder produktionstechnische Funktion als Dienst einer übergeordneten Prozessführungsebene (PFE) zur Verfügung. Es nimmt damit die Position eines Dienstanbieters ein. Die vom Anlagenmodul angebotene Dienstleistung kann von der Prozessführungsebene abgerufen werden, die damit ein Dienstnutzer ist. Die Integration mehrerer Anlagenmodule und deren Dienste zu einer Gesamtanlage durch einen Anlagenplaner wird als PFE-Engineering bezeichnet.

Die Druckschrift "DIMA - Dezentrale Intelligenz für modulare Anlagen" der WAGO GmbH vom 14. Dezember 2015 beschreibt einen modularen Anlagenbau, wobei sich eine Gesamtanlage aus mehreren autarken Modulen zusammensetzt. Das sogenannte Orchestrieren von Diensten unterschiedlicher Module in eine gewünschte Reihenfolge wird durch ein zentrales Batch-Werkzeug ermöglicht.

Die Druckschrift WO 2009/053472 A1 beschreibt ein Verfahren zur Orchestrierung von Services eines serviceorientierten Automationssystems sowie eine zentrale Orchestrierungsmaschine.

Es stellt sich daher die Aufgabe der vorliegenden Erfindung Module einer technischen Anlage bereitzustellen, die das PFE-Engineering verbessern, sowie ein System und ein Verfahren bereitzustellen, die die Durchführung eines technischen Prozesses verbessern.

### 3. Zusammenfassung der Erfindung

Gelöst wird die obige Aufgabe durch ein Modul für eine technische Anlage nach Anspruch 1, durch ein System zur Durchführung eines technischen Prozesses nach Anspruch 12 sowie durch ein Verfahren zur Durchführung eines technischen Prozesses mittels einer technischen Anlage nach Anspruch 18

Insbesondere wird die obige Aufgabe gelöst durch ein Modul für eine technische Anlage aufweisend eine technische Hardware zur Durchführung eines technischen Teilprozesses, eine Steuerung zur lokalen Steuerung der technischen Hardware, wobei die Steuerung eingerichtet ist, die technische Hardware autark zu steuern und eine Außenschnittstelle der Steuerung, wobei die Außenschnittstelle eine Verwaltungsschale aufweist, wobei die Verwaltungsschale mindestens einen Dienst bezogen auf ein Ausgangsprodukt des Moduls über ein Netzwerk veröffentlicht und wobei die Außenschnittstelle eingerichtet ist, mindestens einen Dienst bezogen auf ein Eingangsprodukt des Moduls über das Netzwerk anzufragen.

Eine technische Anlage kann aus mehreren dieser Module aufgebaut sein. Wird mehr Produktionskapazität gewünscht, können Module auf eine einfache Art und Weise zur Anlage hinzugeschaltet werden und dann bestimmte Teilprozesse durchführen. Da die Steuerung des jeweiligen Moduls die technische Hardware lokal und autark steuert und sie diese beispielsweise ohne Steuerung von außen in bestimmte definierte Zuständen bringen kann, wird der Steuerungsaufwand der Gesamtanlage minimiert. Die Steuerung des Moduls kann somit bereits vom Modulhersteller bereitgestellt, programmiert und konfiguriert sein, so dass der Anlagenhersteller mit sehr wenig Aufwand die Steuerung der Gesamtanlage erstellen kann.

Zur Kommunikation mit anderen Modulen weist das Modul eine Außenschnittstelle der Steuerung auf. Die Außenschnittstelle weist zudem eine Verwaltungsschale auf, die mindestens einen Dienst bezogen auf ein Ausgangsprodukt des jeweiligen Moduls über ein Netzwerk veröffentlicht. Die Verwaltungsschale veröffentlicht daher, welchen Dienst oder welche Dienste das jeweilige Modul bezüglich eines Ausgangsproduktes durchführen kann. Führt das Modul beispielsweise ein Aufheizen eines Produktes durch, wird die Verwaltungsschale den Dienst "Aufheizen" und ggf. das damit erhältliche Ausgangsprodukt ggf. über beschreibende Eigenschaften des Ausgangsprodukts veröffentlichen.

Weiterhin ist die Außenschnittstelle dazu eingerichtet, mindestens einen Dienst bezogen auf ein Eingangsprodukt des jeweiligen Moduls über das Netzwerk anzufragen. Benötigt das Modul beispielsweise eine genau bestimmte Menge eines bestimmten Eingangsproduktes wird sie nach einem Dienst "Dosieren" des bestimmten Eingangsproduktes anfragen.

Auf diese Art und Weise sind die Module in der Lage selbstständig über ihre Verwaltungsschalen miteinander zu kommunizieren und sich gegenseitig Dienste anzubieten und anzufragen. Damit sind die Module in der Lage, einen technischen Prozess selbstständig aufzubauen, ohne dass eine Prozessführungsebene oder ein Anlagenplaner manuell die Module zusammenstellen muss. Diese Art des automatischen PFE-Engineerings von Modul zu Modul ohne, dass eine übergeordnete Entität, insbesondere eine übergeordnete Prozessführungsebene vorhanden ist, ist auch fehlerfreier, da jedes der beteiligten Module genau seine individuellen Verfügbarkeiten, die benötigte Beschaffenheit der Eingangsmaterialien, Randbedingungen, Hilfsstoffe, Wartungspläne, Einschränkungen, etc. kennt und seine Dienste entsprechend anbieten kann. Durch dieses Zusammenspiel und die Kommunikation der Module über ihre Verwaltungsschalen entstehen automatisch ein möglicher technischer Prozess oder mehrere alternative technische Prozesse, die zu einem Endprodukt führen. Werden mehrere alternative technische Prozesse erhalten, kann der beste Prozess ausgewählt werden.

Bevorzugt ist in der Verwaltungsschale der mindestens eine Dienst bezogen auf das Ausgangsprodukt des Moduls mittels standardisierter Meta-Information über das Netzwerk veröffentlicht. Bevorzugt wird dabei die standardisierte Meta-Information von der Steuerung fortlaufend aktuell gehalten. Die Verwendung standardisierter Meta-Information erleichtert die Suche nach dem entsprechenden Dienst.

Bevorzugt ist die Außenschnittstelle eingerichtet, den Dienst bezogen auf das Eingangsprodukt mittels auf das Eingangsprodukt bezogener standardisierter Meta-Information über das Netzwerk anzufragen.

Bevorzugt weist das Modul einen Zustandsautomaten auf. Mit Hilfe eines Zustandsautomaten kennt das jeweilige Modul exakt seinen derzeitigen Zustand und die notwendigen Übergänge zum Erlangen eines anderen Ziel-Zustandes.

Bevorzugt ist zumindest ein Zustand des Zustandsautomaten in der Verwaltungsschale veröffentlicht und der Zustand des Zustandsautomaten ist abhängig von einer Antwort auf die Anfrage nach einem Dienst bezogen auf das Eingangsprodukt des Moduls. Insbesondere kann der Dienst bezogen auf das Eingangsprodukt des Moduls ein Bereitstellen des Eingangsproduktes sein. Können beispielsweise alle benötigten Eingangsprodukte eines Moduls bereitgestellt werden, kann das Modul mit der Be- oder Verarbeitung dieser Eingangsprodukte beginnen und dazu seinen Zustand zu "in Betrieb" ändern.

Bevorzugt ist das Modul eingerichtet zur Bearbeitung des Eingangsproduktes und zur Ausgabe des Ausgangsproduktes und / oder zur Messung einer physikalischen Größe des Eingangsproduktes und / oder des Ausgangsproduktes und / oder zur physikalischen Speicherung des Eingangsproduktes und / oder des Ausgangsproduktes. Das Modul kann unterschiedlicher Art sein und unterschiedliche Aufgaben durchführen bzw. unterschiedliche Dienste anbieten, die sich auf ein Eingangsprodukt oder Ausgangsprodukt des Moduls beziehen. Insbesondere kann ein Modul zur Bearbeitung, Ausgabe, Messung oder Speicherung geeignet sein.

Bevorzugt ist die technische Hardware ausgebildet, aus dem Eingangsprodukt das Ausgangsprodukt zu erzeugen, und die technische Hardware ist weiterhin ausgebildet, zur Erzeugung des Ausgangsproduktes das Eingangsprodukt zu ändern, durch Änderung einer chemischen Zusammensetzung, und/oder Änderung zumindest einer physikalischen Eigenschaft, und/oder Hinzufügen von Material, und/oder Abtragen von Material. Die technische Hardware hat bevorzugt ein Eingangsprodukt und ein Ausgangsprodukt und sie ändert das Eingangsprodukt derart, dass ein Ausgangsprodukt erzeugt wird. Ein Produkt ist dadurch definiert, dass es durch die technische Hardware durch zumindest eines der vier genannten Verfahren geändert werden kann. Durch die Änderung des Eingangsproduktes zum Ausgangsprodukt durch die technische Hardware wird eine Wertschöpfung erzielt. Daher weist der Gesamtprozess zumindest eine technische Hardware dieser Art auf, die eine Wertschöpfung erzielt. Bevorzugt weist die technische Hardware einen Aktor auf, der auf das Eingangsprodukt einwirkt.

Bevorzugt umfasst die Verwaltungsschale statische Informationen über die technische Hardware und deren Funktionsumfang und dynamische Informationen als Echtzeit-Werte der technischen Hardware und deren Funktionsfähigkeit, wobei die Echtzeit-Werte von der Steuerung erzeugt werden.

Hierbei beschreiben die statischen Informationen die technische Hardware und die Steuerung, so dass alle Informationen bereitgestellt werden, die für das PFE-Engineering benötigt werden. Diese Informationen können beispielsweise eine detaillierte Beschreibung der durch das Modul angebotenen Dienste, eine Beschreibung der verfügbaren Zustände und dem regelungstechnischen Verhalten des Moduls, eine Beschreibung der verfügbaren Befehle und deren Syntax und eine Beschreibung der auslesbaren Zustandsinformationen und Messwerte umfassen.

Daneben umfasst die Verwaltungsschale auch dynamische Informationen als Echtzeit-Werte der technischen Hardware und bietet daher die Möglichkeit der Kommunikation mit dem Modul während des Betriebs. Diese Echtzeit-Werte der technischen Hardware werden durch die Steuerung in die Verwaltungsschale, insbesondere in eine Informationsstruktur auf einem OPC-UA Server, geschrieben. Damit sind auch diese, sich während des Betriebs dynamisch ändernde Echtzeit-Werte einfach und zielgerichtet von außen abrufbar, beispielsweise durch andere Module oder dem Anfragermodul.

Bevorzugt erzeugt die Steuerung die Echtzeit-Werte aus Messdaten und/oder Steuerdaten der technischen Hardware und/oder über die Außenschnittstelle übertragene Kommunikationsdaten und/oder Zuständen des Zustandsautomaten zu dem durch die Steuerung und die technische Hardware bereitgestellten Dienst und/oder historischen Werten von Messdaten und/oder Steuerdaten der technischen Hardware und/oder von Zuständen des Zustandsautomaten und/oder einer Extrapolation von Messdaten und/oder Steuerdaten der technischen Hardware und/oder Kommunikationsdaten und/oder von Zuständen des Zustandsautomaten.

Bevorzugt weist die Außenschnittstelle einen OPC-UA Server auf, der eine fest vorgegebene Informationsstruktur aufweist, in der die Verwaltungsschale abgebildet ist. Da die Außenschnittstelle der Steuerung einen OPC-UA Server umfasst, kann auf eine einfache und einheitliche Weise mit dem Modul kommuniziert werden. Insbesondere können so individuelle Informationen zielgerichtet von dem Modul abgefragt werden, wobei nicht interessierende Informationen nicht übertragen werden. Insbesondere weist der OPC-UA Server hierzu eine fest vorgegebene Informationsstruktur auf, die statische und dynamische Informationen bezügliche der technischen Hardware des Moduls enthält. Daher können an das Modul zielgerichtete Abfragen nach interessierenden Informationen gerichtet werden.

Bevorzugt bildet die Verwaltungsschale die Information in der Struktur eines Modul Type Packages ab, und enthält damit in strukturierter Form alle Informationen, die zur Integration des Moduls in eine technische Anlage notwendig sind.

Durch die statischen und dynamischen Informationen, die in der Verwaltungsschale zur Verfügung werden, kann das Modul ein komplettes Modul Type Package bereitstellen, das ein Teil der Verwaltungsschale in Industrie 4.0 bildet und alle Daten und Information zur virtuellen und fachlichen Repräsentation des Moduls umfasst. Dabei werden von der Steuerung sowohl alle Daten und Informationen für das automatische PFE-Engineering von Modul zu Modul, als auch für den laufenden Betrieb in der Verwaltungsschale bereitgestellt.

Die oben genannte Aufgabe wird weiterhin gelöst durch ein System zur Durchführung eines Prozesses mittels einer technischen Anlage, aufweisend eine Mehrzahl von Modulen, wie sie oben beschrieben wurden und welche Teilprozesse des technischen Prozesses durchführen können, ein Anfragermodul, aufweisend eine Außenschnittstelle mit einer Verwaltungsschale und ein Netzwerk, welches die Module und das Anfragermodul miteinander verbindet, wobei das Anfragermodul einen Dienst für ein Endprodukt über das Netzwerk bei den Modulen anfragen kann. Das Anfragermodul kann über das Netzwerk mit den - insbesondere allen - technischen Modulen kommunizieren und eine Anfrage nach einem Endprodukt an diese richten. Diese Anfrage kann von einem Modul gehört werden, das das Endprodukt als Ausgangsprodukt bereitstellt. Dieses Modul fragt dann seinerseits die anderen Module an, um ihm seine benötigten Eingangsprodukte in der gewünschten Menge, zur gewünschten Zeit und im gewünschten Zustand bereitzustellen. Melden sich daraufhin entsprechende Module, fragen diese wiederum andere Module nach deren benötigten Eingangsprodukten an. So baut sich nach und nach ein technischer Prozess auf, der mit den entsprechenden Modulen zum vom Anfragermodul angefragten Endprodukt führt. Ausgangspunkt eines solchen Prozesses ist in der Regel ein Modul, das ein Eingangsprodukt eines anderen Moduls speichert und diesem bereitstellt.

Bevorzugt weist das Anfragermodul einen eigenen Zustandsautomaten auf, wobei in einen ersten Zustand des Zustandsautomaten das Anfragermodul einen Dienst für ein Endprodukt über das Netzwerk bei den Modulen anfragt, ein erstes Modul, das den Dienst für das Endprodukt anbietet, mindestens einen Dienst für sein Eingangsprodukt über das Netzwerk bei den anderen Modulen anfragt, ein zweites Modul das den mindestens einen Dienst für das Eingangsprodukt des ersten Moduls als Ausgangsprodukt anbietet, mindestens einen Dienst für sein Eingangsprodukt über das Netzwerk bei den Modulen anfragt und das Anfragermodul eine Nachricht, dass der Prozess vollständig ist, von einem der Module empfängt und wobei der Zustandsautomat des Anfragermoduls in einen zweiten Zustand übergeht, wenn der Prozess vollständig ist, wobei im zweiten Zustand der Prozess gestartet werden kann. Der eigentliche Produktionsprozess wird vorm Anfragermodul gestartet, wenn ihm von einem oder mehreren Modulen signalisiert wird, dass der Prozess vollständig ist, also das Endprodukt produziert werden kann.

Bevorzugt weist das Anfragermodul eine Verwaltungsschale auf und bietet in der Verwaltungsschale mindestens einen Dienst an, der das Endprodukt beinhaltet. Das Anfragermodul kann selbst mindestens einen Dienst anbieten, der das Endprodukt beinhaltet, beispielsweise den Dienst "Bereitstellen des Endproduktes", der beispielsweise von einem nachgelagerten Verpackungsmodul angefragt werden kann. Bevorzugt generiert ein Modul die Nachricht der Vollständigkeit, wenn jedes seiner für den Prozess notwendigen Eingangsprodukte mit dem Zustand "steht zur Verfügung" an seiner Verwaltungsschale anliegt, und wobei die Nachricht der Vollständigkeit vom generierenden Modul an das Anfragermodul übertragen wird. Insbesondere wird dem Anfragermodul die Nachricht der Vollständigkeit übertragen, wenn das Modul, welches das Endprodukt als Ausgangsprodukt hat, feststellt, dass alle seine notwendigen Eingangsprodukte verfügbar sind. Dann ist der technische Prozess vollständig aufgebaut und bereit zur eigentlichen Produktion.

Bevorzugt weist das Anfragermodul eine Recheneinheit auf, die eingerichtet ist, eine Bewertung des geplanten Prozesses durchzuführen, wobei das Bewertungsergebnis Voraussetzung zum Übergang vom ersten Zustand des Zustandsautomaten auf den zweiten Zustand des Zustandsautomaten ist. Das Anfragermodul kann den von den technischen Modulen aufgebauten und vorgeschlagenen Prozess nach seinen Kriterien mittels einer Recheneinheit bewerten. Erst wenn die Bewertung positiv ausfällt, startet das Anfragermodul die Produktion. Dies ist insbesondere dann vorteilhaft, wenn mehrere alternative Prozesse zum Endprodukt führen. Das Anfragermodul kann sich dann für den, nach der Bewertung besten technischen Prozess entscheiden. Die Bewertung kann hinsichtlich unterschiedlicher Kriterien durchgeführt werden, beispielsweise nach der Prozessdauer, Zuverlässigkeit der Module, Qualität, dem Energiebedarf, etc..

Bevorzugt ist die Recheneinheit des Anfragermoduls eingerichtet, die Bewertung anhand einer Optimum-Berechnung basierend auf dem technischen Aufwand durchzuführen. Damit kann der technisch beste Prozess ausgewählt werden.

Die oben genannte Aufgabe wird weiterhin gelöst durch ein Verfahren zur Durchführung eines technischen Prozesses mittels einer technischen Anlage, aufweisend eine Mehrzahl von Modulen, mindestens ein Anfragermodul und ein Netzwerk, wobei die Module eine technische Hardware zur Durchführung eines technischen Teilprozesses und eine Steuerung zur lokalen Steuerung der technischen Hardware aufweisen, wobei die Steuerung eine Außenschnittstelle aufweist, die eine Verwaltungsschale umfasst, wobei das Verfahren die folgenden Schritte umfasst:
a. Veröffentlichen mindestens eines Dienstes, der auf ein Ausgangsprodukt des jeweiligen Moduls bezogen ist, über das Netzwerk durch die Verwaltungsschale jedes Moduls;
b. Anfragen mindestens eines Dienstes, der auf ein Eingangsprodukt des jeweiligen Moduls bezogen ist, über das Netzwerk durch die Außenschnittstelle jedes Moduls;
c. Anfragen mindestens eines Dienstes für ein Endprodukt über das Netzwerk durch das Anfragermodul;
d. Empfangen einer Nachricht, dass der Prozess vollständig ist, von einem der Module durch das Anfragermodul.

Auch hierbei erfolgt ein automatischer Aufbau eines technischen Prozesses zur Produktion eines Endproduktes durch eine selbstständige Kommunikation der Module untereinander. Ausgangspunkt ist eine Anfrage nach mindestens einem Dienst für ein Endprodukt über das Netzwerk durch das Anfragermodul. Dieses erhält dann, wenn der Prozess vollständig aufgebaut ist, eine entsprechende Nachricht. Bevorzugt fragt jedes Modul nur dann an, wenn es selbst angefragt wurde.

Bevorzugt weist das Verfahren weiterhin die folgenden Schritte auf:
e. Durchführen einer Bewertung des geplanten technischen Prozesses durch eine Recheneinheit des Anfragermoduls; und
f. Starten des Prozesses unter Berücksichtigung des Bewertungsergebnisses.

Nach dem Empfang der Nachricht, dass der Prozess vollständig ist, kann das Anfragermodul den Prozess bewerten, ggf. die beste Alternative auswählen und den Prozess starten.

Weitere bevorzugte Ausführungsformen der Erfindung ergeben sich aus den abhängigen Ansprüchen.

### 4. Kurze Beschreibung der Zeichnungen

Im Folgenden werden bevorzugte Ausführungsformen der vorliegenden Erfindung mithilfe der Zeichnungen beschrieben, in denen zeigt:
- Fig. 1: eine schematische Ansicht einer technischen Anlage mit mehreren Modulen und einem Anfragermodul;
- Fig. 2: ein Schema, das ein Anfragermodul und die Kommunikation und den Aufbau eines technischen Prozesses durch Module einer technischen Anlage zeigt;
- Fig. 3: ein Diagramm, das beispielhafte Verfahrensschritte eines technischen Prozesses zeigt;
- Fig. 4: ein Diagramm, das beispielhaft die Zusammenarbeit von unterschiedlichen Modulen einer technischen Anlage zeigt; und
- Fig. 5: ein Diagramm das beispielhafte Zustände eines Anfragermoduls darstellt.

### 5. Beschreibung bevorzugter Ausführungsformen

Im Folgenden werden bevorzugte Ausführungsformen der vorliegenden Erfindung in Bezug auf die Figuren im Detail beschrieben.

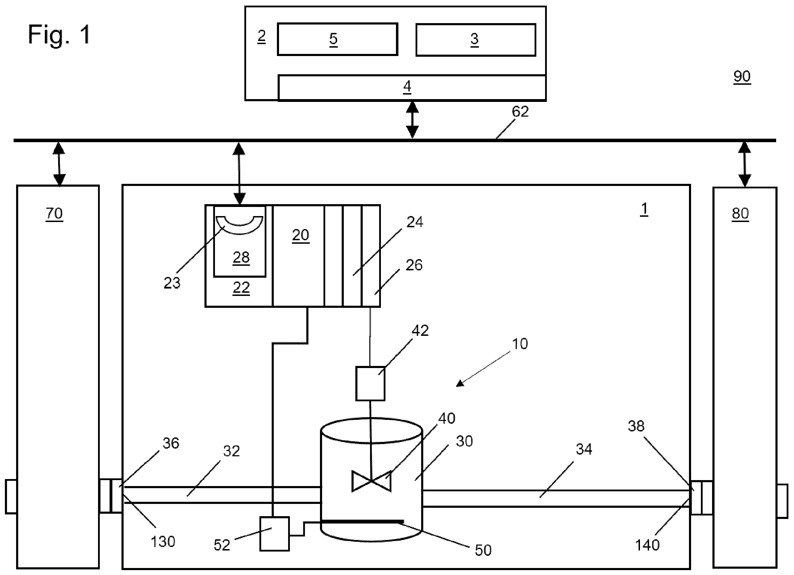

Figur 1 zeigt eine technische Anlage 90, die aus mehreren einzelnen Modulen 1, 70, 80 und möglicherweise weiteren nicht dargestellten Modulen aufgebaut ist. Die technische Anlage 90 weist weiterhin ein Anfragermodul 2 auf, welches u.a. für eine Auftragserteilung an die technische Anlage 90 zuständig ist. Das Anfragermodul 2 und die Module 1, 70, 80 können miteinander über einen geeigneten Bus 62 kommunizieren.

Das Modul 1 der technischen Anlage 90 steht beispielhaft für alle Module 1, 70, 80 der technischen Anlage 90. Es umfasst eine technische Hardware 10 zur Durchführung eines technischen Teilprozesses, beispielsweise für die chemische Industrie. Die technische Anlage kann jedoch auch andere technische Herstellungsprozesse betreffen, beispielsweise die Fertigung und Montage von Produkten, Verpackungstechnik, Logistik, etc..

Bevorzugt ist die technische Hardware 10 des Moduls 1 ausgebildet, aus einem Eingangsprodukt 130 ein Ausgangsprodukt 140 zu erzeugen. Hierzu ist die technische Hardware 10 ist weiterhin ausgebildet, zur Erzeugung des Ausgangsproduktes 140 das Eingangsprodukt 130 zu ändern. Dies kann durch eine Änderung einer chemischen Zusammensetzung, wie dies beispielsweise in Reaktoren in der chemischen Industrie üblich ist, erfolgen. Dies kann weiterhin durch eine Änderung zumindest einer physikalischen Eigenschaft erfolgen, beispielsweise der Temperatur, Dichte, Entropie, etc. Weiterhin kann die Erzeugung eines Ausgangsproduktes 140 erfolgen durch Hinzufügen von Material, beispielsweise beim Montieren, Löten, Bedrucken oder 3D-Drucken. Die Erzeugung kann schließlich auch erfolgen durch Abtragen von Material, wie dies beispielsweise beim Bohren, Fräsen, Ätzen, etc. der Fall ist.

Durch die Änderung des Eingangsproduktes 130 zum Ausgangsprodukt 140 durch die technische Hardware 10 wird eine Wertschöpfung erzielt. Daher weist der Gesamtprozess zumindest eine technische Hardware 10 dieser Art auf, die eine Wertschöpfung erzielt. Bevorzugt weist die technische Hardware zumindest einen Aktor im weitesten Sinne auf, der auf das Eingangsprodukt 130 einwirkt, beispielsweise ein Bedampfer.

Im dargestellten prozesstechnischen Beispiel umfasst die technische Hardware 10 einen Aktor in Form eines Reaktors 30, der einen Mischer 40 aufweist, welcher über einen Elektromotor 42 angetrieben ist. Weiterhin weist der Reaktor 30 einen elektrischen Heizstab 50 auf, welcher über eine Leistungselektronik 52 angesteuert wird. Der Reaktor 30 selbst besteht aus einem bevorzugt geschlossenen Gefäß, an das ein Einlassrohr 32 und ein Auslassrohr 34 angeschlossen ist, um ihn zu befüllen oder zu entleeren. Das Einlassrohr 32 erstreckt sich bis zur Außengrenze des beispielhaften Moduls 1 und endet dort in einem Einlassflansch 36. Ebenso erstreckt sich das Auslassrohr 34 bis zur Systemgrenze des Moduls 1 und endet dort in einem Auslassflansch 38. Über den Einlassflansch 36 ist das Modul 1 an ein vorgeschaltetes Modul 70 und über den Auslassflansch 38 an ein nachgeschaltetes Modul 80 anschließbar. Selbstverständlich sind andere technische Verschaltungsmöglichkeiten, wie beispielsweise mehrere Einlässe oder mehrere Auslässe bzw. Parallelschaltungen von Modulen 1, 70, 80 gleichfalls möglich.

Das Modul 1 weist weiterhin eine Steuerung 20 zur lokalen Steuerung seiner technischen Hardware 10 auf. Die Steuerung 20 ist so eingerichtet, dass sie die technische Hardware 10, also hier beispielhaft den Elektromotor 42 des Rührwerks 40 und die Leistungselektronik 52 des Heizstabs 50 autark steuern kann. Damit ist die Steuerung 20 beispielsweise in der Lage, das Modul 1 technisch in einen definierten Zustand zu bringen. Das Modul 1 kann eine Anzahl von genau definierten technischen Zuständen aufweisen und kann autark zwischen diesen Zuständen wechseln. Damit kann das Modul beispielsweise einen technischen Teilprozess ohne Einfluss von außen autark durchführen.

Das Modul 1 kann weiterhin beispielsweise Sensoren, wie Durchfluss-, Druck-, oder Temperatursensoren, oder elektrisch bedienbare Ventile o. ä. Elemente aufweisen (nicht dargestellt). Solche Sensoren oder Aktoren sind ebenfalls an die Steuerung 20 angeschlossen und können von der Steuerung 20 abgefragt oder gesteuert werden.

Die Steuerung 20 weist hierzu I/O-Module 24, 26 auf, mit denen die Steuerung 20 Aktoren wie den Elektromotor 42 des Rührwerks 40 bzw. die Leistungselektronik 52 des Heizstabs 50 ansteuern kann. Weitere I/O-Module für etwaige Sensoren oder weitere Aktoren sind vorhanden, wenn diese für die technische Funktion des Moduls 1 erforderlich sind.

Die Module 70 und 80 und weitere Module können ähnlich zu dem Modul 1 aufgebaut sein, wobei sie ebenfalls eine Steuerung ähnlich zur Steuerung 20 aufweisen, welche die technische Hardware des jeweiligen Moduls lokal und autark steuern kann. Entsprechend sind die Module 1, 70, 80 in sich steuerungstechnisch autark, so dass technische Hardware und Steuerung zusammen ein flexibel einsetzbares Modul für eine technische Anlage 90 bilden, welches quasi per *"plug and play"* technisch und steuerungstechnisch zu einer Gesamtanlage 90 zusammengesetzt werden kann.

Zur Kommunikation der Steuerung 20 des Moduls 1 mit dem Anfragermodul 2 oder den anderen Modulen 70, 80 über den Bus 62 weist die Steuerung 20 eine Außenschnittstelle 22 auf. Die Außenschnittstelle 22 umfasst eine Verwaltungsschale 23 die in einem OPC-UA Server 28 zur Kommunikation mit dem Anfragermodul 2 und den anderen Modulen 70, 80 der Anlage 90 abgebildet ist. Der OPC-UA Server 28 weist hierzu eine fest vorgegebene Informationsstruktur auf, in der die Verwaltungsschale 23 abgebildet ist. Die Verwaltungsschale 23 kann statische Informationen und dynamische Informationen aufweisen. Die statischen Informationen beschreiben die technische Hardware 10 und die Steuerung 20. Die statischen Informationen können beispielsweise Beschreibungen der vom Modul 1 angebotenen Dienste, Spezifikationen der Eingangsprodukte 130, Spezifikationen der Ausgangsprodukte 140, Angaben zu Produktionshilfsmitteln, wie Strom, Wasser, etc., Anwenderdokumentationen, Schnittstellendefinitionen mit entsprechender Beschreibung der Syntax der Befehle, Informationen zur direkten Aufnahme der Kommunikation von der Prozessführungsebene zum Moduls 1, eine graphische Darstellung des Moduls 1, etc. umfassen.

Zusätzlich zu den statischen Informationen umfasst die Informationsstruktur des OPC-UA Servers auch dynamische Informationen betreffend das Modul 1, die sich zeitlich ändern können. Damit kann das Modul 1 über den OPC-UA Server mit anderen Anlagenbestandteilen, auch im laufenden Betrieb kommunizieren und dynamische Informationen bereitstellen, bzw. austauschen. Die dynamischen Informationen werden durch die Steuerung 20 als Echtzeit-Werte der technischen Hardware 10 in die Informationsstruktur des OPC-UA Servers eingeschrieben.

Durch die statischen und dynamischen Informationen, die in dem OPC-UA Server zur Verfügung gestellt werden, kann das Modul 1 in seiner Verwaltungsschale 23 die Information in der Struktur eines kompletten sog. "Modul Type Package (MTP)" abbilden, das ein Teil der Verwaltungsschale in Industrie 4.0 bildet und alle Daten und Information zur virtuellen und fachlichen Repräsentation eines Moduls umfasst.

Insbesondere veröffentlicht die Verwaltungsschale 23 der Module 1, 70, 80 mindestens einen Dienst bezogen auf ein Ausgangsprodukt 140 des jeweiligen Moduls 1 über das Netzwerk 62. Weiterhin ist die Außenschnittstelle 22 eingerichtet, mindestens einen Dienst bezogen auf ein Eingangsprodukt 130 des jeweiligen Moduls 1 über das Netzwerk 62 anzufragen und entsprechende Antworten anderer Module 1, 70, 80 zu empfangen.

Das Anfragermodul 2 weist ebenfalls eine Verwaltungsschale 4 zur Kommunikation mit den Modulen 1, 70, 80 sowie einen eigenen Zustandsautomaten 3 zur Erzeugung und Darstellung von definierten Zuständen auf.

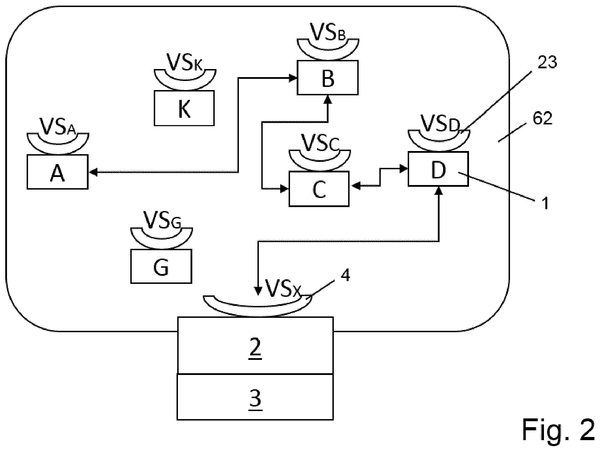

Wie in Fig. 2 dargestellt, kann ein Anfragermodul 2 über ein als Fläche dargestelltes Netzwerk 62 mit einer Mehrzahl von Modulen 1, die mit A, B, C, D, G und K bezeichnet sind, kommunizieren. Zum Start des PFE-Engineering braucht das Anfragermodul 2 lediglich eine Anfrage nach einem gewünschten Endprodukt an die Module 1 zu senden. Sofern eines der Module 1, hier das Modul D, ein solches Endprodukt bereitstellen kann, sendet es seinerseits eine Anfrage an die anderen Module A, B, C, K und G nach den dafür benötigten Diensten bezüglich des Eingangsproduktes des Moduls D. Im dargestellten Fall kann das Modul C den vom Modul D benötigten Dienst bzw. das benötigte Eingangsprodukt des Moduls D bereitstellen. Daraufhin sendet auch Modul C eine Anfrage an die anderen Module A, B, D, K und G nach den dafür benötigten Diensten bezüglich des Eingangsproduktes des Moduls C. Diesen Dienst kann im Beispiel der Fig. 2 das Modul B bereitstellen. Die vom Modul B benötigten Dienste stellt im Beispiel der Fig. 2 das Modul A bereit. Das Modul A ist ein Modul das das Eingangsprodukt des Moduls B speichert und somit selbst kein Eingangsprodukt benötigt. Der technische Prozess ist damit vollständig, was von einem der Module A, B, C, D an das Anfragermodul 2 kommuniziert wird.

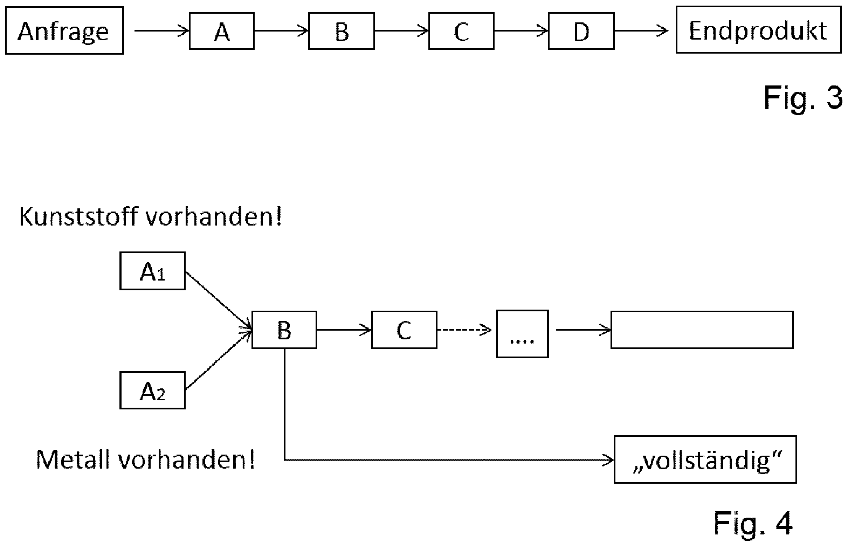

Entsprechend bildet sich bei diesem automatischen PFE-Engineering durch die beteiligten Module 1 selbst ein technischer Prozess aus, wie er in Fig. 3 beispielhaft dargestellt ist. Eine übergeordnete Prozessführungsebene, insbesondere eine übergeordnete Anlagensteuerung, ist hierbei nicht erforderlich.

In Fig. 4 ist die ein anderer technischer Prozess dargestellt, bei dem das Modul B zwei Eingangsprodukte oder entsprechende Dienste benötigt. Im Beispiel von Fig. 4 benötigt Modul B Kunststoff von Modul A1 und Metall von Modul A2. Wenn sowohl Modul A1 an Modul B meldet, dass Kunststoff vorhanden ist und Modul A2 meldet, dass Metall vorhanden ist, kann Modul B an das Anfragermodul 2 melden, dass der Prozess vollständig ist. Das Anfragermodul 2 kann daraufhin den Prozess bewerten und ggf. die tatsächliche Produktion starten.

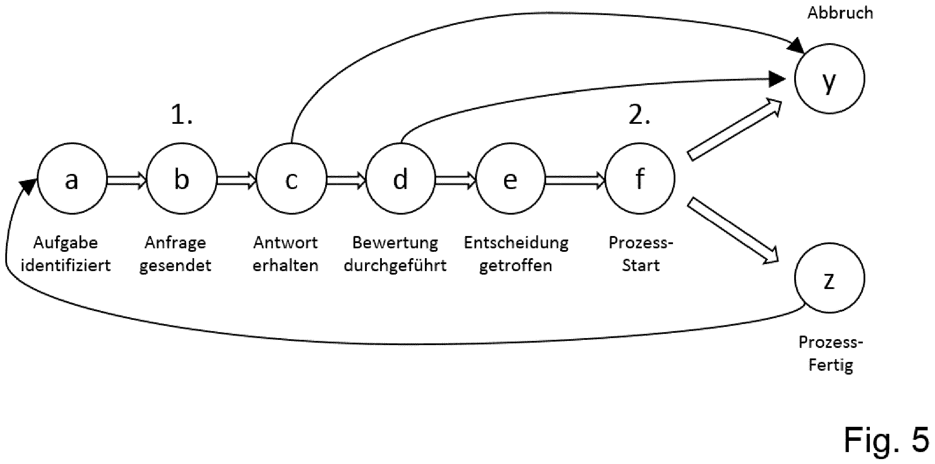

Ein beispielhaftes Zustandsdiagramm eines Zustandsautomaten eines Anfragermoduls 2 ist in Fig. 5 dargestellt. Im Zustand a hat das Anfragermodul die Aufgabe identifiziert, beispielsweise die Aufgabe "Fertige 1000 Verbinder des Typs X". Daraufhin fragt das Anfragermodul 2 bei den Modulen 1 des Netzwerks 62 nach einem Dienst an, der 1000 Verbinder des Typs X bereitstellen kann. Danach wechselt der Zustand des Anfragermoduls 2 in den Zustand b, welcher dem oben genannten ersten Zustand entspricht. Sobald das Anfragermodul 2 von einem der Module die Nachricht "Prozess vollständig" erhalten hat, wechselt es in den Zustand c. Daraufhin bewertet das Anfragermodul 2 den angebotenen Prozess mittels seiner Recheneinheit. Sobald dies geschehen ist, wechselt es in den Zustand d. Danach trifft das Anfragermodul 2 die Entscheidung, ob und ggf. welcher technische Prozess durchgeführt werden soll. Ist dies erfolgt, wechselt das Anfragermodul in den Zustand e. Daraufhin startet das Anfragermodul 2 den Produktionsprozess und wechselt in den Zustand f. Ist die Produktion erfolgreich verlaufen, wechselt das Anfragermodul 2 in den Zustand z. Ist jedoch die Produktion gescheitert, wechselt es in den Zustand y. Diesen Zustand kann das Anfragermodul 2 beispielsweise auch dann einnehmen, wenn es eine negative Antwort von den Modulen 1 erhalten hat oder wenn die Bewertung des vorgeschlagenen Prozesses negativ ausgefallen ist. Ist der Prozess abgeschlossen, kann das Anfragermodul 2 wieder eine neue Aufgabe annehmen und identifizieren.

Die Steuerung 20 kann die die Echtzeit-Werte, die in die Informationsstruktur des OPC-UA Servers 28 eingeschrieben werden, aus Messdaten, Steuerdaten und über die Außenschnittstelle 22 übertragene Kommunikationsdaten der technischen Hardware 10 erzeugen. Damit werden Parameter, beispielsweise Messwerte, Steuerparameter oder Vorgabewerte, etc. der technischen Hardware 10 zum Abruf bzw. zur Kommunikation bereitgestellt. Im Beispiel des Moduls 1 könnten die Echtzeit-Werte beispielsweise die Drehzahl des Motors 42 oder die aktuelle Temperatur des Reaktors 30 sein.

Daneben kann die Steuerung 20 die Echtzeit-Werte aus Zuständen des Zustandsautomaten des durch die Steuerung 20 und die technische Hardware 10 bereitgestellten Dienstes erzeugen. Damit können in einem Zustandsautomaten des jeweiligen Moduls 1 die Zustände der technischen Hardware 10, wie beispielsweise "in Betrieb", "gestoppt", "in Wartung", "defekt", "Aufheizen", oder der Auftragsplan, die Belegungszeiten, der Wartungsplan, etc. der technischen Hardware 10, zum Abruf bzw. zur Kommunikation bereitgestellt werden. Im Beispiel des Moduls 1 könnten die Echtzeit-Werte beispielsweise die Zustände "mischt" und "heizt auf" sein, oder die Verfügbarkeit bzw. Nicht-Verfügbarkeit eines bestimmten Dienstes. Beispielsweise, wenn der Heizstab 50 ausgetauscht werden muss aber der Mischer 40 währenddessen zur Verfügung steht.

Weiterhin kann die Steuerung 20 die Echtzeit-Werte auch aus historischen Werten von Messdaten, Steuerdaten und über die Außenschnittstelle 22 übertragene Kommunikationsdaten der technischen Hardware 10 oder von Zuständen des durch die Steuerung 20 und technische Hardware 10 bereitgestellten Dienstes erzeugen. Damit können Echtzeit-Werte zum Abruf bzw. zur Kommunikation bereitgestellt werden, die die Vergangenheit oder Historie berücksichtigen oder aus historischen Werten berechnet werden. Beispielsweise könnte der nächste Wartungstermin der technischen Hardware 10 dynamisch aufgrund aktueller Belastung und vergangener Laufzeiten bei unterschiedlichen Belastungsgraden oder der Anzahl kritischer Zustände der technischen Hardware 10 durch die Steuerung 60 berechnet und bereitgestellt werden. Wenn beispielsweise der Mischer 40 durch den Motor 42 mit unterschiedlichen Drehzahlen und Leistungen betrieben werden kann, kann die Dauer der Verfügbarkeit des Moduls 1 von den Drehzahlen und Leistungen der vergangenen Aufträge abhängen. Ggf. muss der Motor 42 zum Abkühlen im aktuellen Auftrag mit einer geringeren Leistung oder Drehzahl betrieben werden.

Außerdem kann die Steuerung 20 die Echtzeit-Werte durch Extrapolation von Messdaten, Steuerdaten und über die Außenschnittstelle 22 übertragenen Kommunikationsdaten der technischen Hardware 10 oder von Zuständen des durch die Steuerung 20 und technische Hardware 10 bereitgestellten Dienstes erzeugen. Die Steuerung kann weiterhin Echtzeit-Werte berechnen und bereitstellen, die in die Zukunft extrapoliert sind. Beispielsweise kann die Steuerung Temperaturverläufe, notwendige Wartungs- oder Pausezeiten bei derzeitiger Belastung, notwendige zukünftige Abkühlphasen, freie Zeitschlitze, mögliche Einschränkungen einer maximalen Drehzahl, etc. berechnen und bereitstellen. Für die Extrapolation kann die Steuerung 20 unterschiedliche Modelle verwenden. Damit kann die Steuerung 20 beispielsweise nach Abschluss eines Auftrags einen Dienst nur mit bestimmten Randbedingungen anbieten. Beispielsweise, wenn der Motor 42 noch erhitzt ist, ein Rühren eines Produktes im Reaktor 30 nur bis zu einer bestimmten Leistung bzw. bis zu einer bestimmten Drehzahl des Motors 42 oder nur für eine begrenzte Zeitdauer.

### Bezugszeichenliste:

- 1: Modul
- 2: Anfragemodul
- 3: Zustandsautomat
- 4: Verwaltungsschale
- 10: technische Hardware
- 20: Steuerung
- 22: Außenschnittstelle
- 23: Verwaltungsschale
- 24, 26: I/O-Modul
- 28: OPC-UA Server
- 30: Reaktor
- 32: Einlassleitung
- 34: Auslassleitung
- 36: Einlassflansch
- 38: Auslassflansch
- 40: Rührwerk
- 42: Motor
- 50: Heizstab
- 52: Leistungselektronik
- 62: Datenbus
- 70, 80: weitere Module
- 90: technische Anlage
- 130: Eingangsprodukt
- 140: Ausgangsprodukt

## Patentansprüche

1. Modul (1) für eine technische Anlage (90) aufweisend
a. eine technische Hardware (10) zur Durchführung eines technischen Teilprozesses;
b. eine Steuerung (20) zur lokalen Steuerung der technischen Hardware (10), wobei die Steuerung (20) eingerichtet ist, die technische Hardware (10) autark zu steuern; und
c. eine Außenschnittstelle (22) der Steuerung (20); wobei
d. die Außenschnittstelle (22) eine Verwaltungsschale (23) aufweist, wobei die Verwaltungsschale (23) dazu eingerichtet ist, mindestens einen Dienst über ein Netzwerk (62) zu veröffentlichen;**dadurch gekennzeichnet,**
**dass** der mindestens eine Dienst auf ein Ausgangsprodukt (140) des Moduls (1) bezogen ist und
e. dass die Außenschnittstelle (22) eingerichtet ist, mindestens einen Dienst bezogen auf ein Eingangsprodukt (130) des Moduls (1) über das Netzwerk (62) anzufragen.

2. Modul nach Anspruch 1, wobei in der Verwaltungsschale (23) der mindestens eine Dienst bezogen auf ein Ausgangsprodukt (140) des Moduls (1) mittels standardisierter Meta-Information über das Netzwerk (62) veröffentlicht ist.

3. Modul nach einem der Ansprüche 1 oder 2, wobei die Außenschnittstelle (22) eingerichtet ist, den Dienst bezogen auf das Eingangsprodukt (130) mittels auf das Eingangsprodukt (130) bezogener standardisierter Meta-Information über das Netzwerk (62) anzufragen.

4. Modul gemäß einem der Ansprüche 1 bis 3 weiterhin aufweisend einen Zustandsautomaten.

5. Modul nach Anspruch 4, wobei zumindest ein Zustand des Zustandsautomaten in der Verwaltungsschale (23) veröffentlicht ist, und wobei der Zustand des Zustandsautomaten abhängig ist, von einer Antwort auf die Anfrage nach einem Dienst bezogen auf das Eingangsprodukt (130) des Moduls (1).

6. Modul gemäß einem der Ansprüche 1 bis 5, wobei das Modul (1) eingerichtet ist:
a. zur Bearbeitung des Eingangsproduktes (130) und zur Ausgabe des Ausgangsproduktes (140); und/oder
b. zur Messung einer physikalischen Größe des Eingangsproduktes (130) und / oder des Ausgangsproduktes (140); und/oder
c. zur physikalischen Speicherung des Eingangsproduktes (130) und/oder des Ausgangsproduktes (140).

7. Modul gemäß einem der Ansprüche 1 bis 6, wobei die technische Hardware (10) ausgebildet ist, aus dem Eingangsprodukt (130) das Ausgangsprodukt (140) zu erzeugen, und die technische Hardware (10) weiterhin ausgebildet ist, zur Erzeugung des Ausgangsproduktes (140) das Eingangsprodukt (130) zu ändern durch,
a. Änderung einer chemischen Zusammensetzung; und/oder
b. Änderung zumindest einer physikalischen Eigenschaft; und/oder
c. Hinzufügen von Material; und/oder
d. Abtragen von Material.

8. Modul gemäß einem der Ansprüche 1 bis 7, wobei die Verwaltungsschale (23) statische Informationen über die technische Hardware (10) und dynamische Informationen als Echtzeit-Werte der technischen Hardware (10) umfasst, wobei die Echtzeit-Werte von der Steuerung (20) erzeugbar sind.

9. Modul gemäß Anspruch 8, wobei die Steuerung (20) dazu eingerichtet ist, die Echtzeit-Werte zu erzeugen aus
a. Messdaten und/oder Steuerdaten der technischen Hardware (10); und/oder
b. über die Außenschnittstelle übertragene Kommunikationsdaten; und/oder
c. Zuständen des Zustandsautomaten zu dem durch die Steuerung (20) und die technische Hardware (10) bereitgestellten Dienst; und/oder
d. historischen Werten von Messdaten und/oder Steuerdaten der technischen Hardware (10) und/oder von Zuständen des Zustandsautomaten; und/oder
e. einer Extrapolation von Messdaten und/oder Steuerdaten der technischen Hardware (10) und/oder Kommunikationsdaten und/oder von Zuständen des Zustandsautomaten.

10. Modul gemäß einem der Ansprüche 1 bis 9, wobei die Außenschnittstelle (22) einen OPC-UA Server (28) aufweist, der eine fest vorgegebene Informationsstruktur aufweist, in der die Verwaltungsschale (23) abgebildet ist.

11. Modul gemäß einem der Ansprüche 1 bis 10, wobei die Verwaltungsschale (23) Information in der Struktur eines Modul Type Packages abbildet, das in strukturierter Form alle Informationen enthält, die zur Integration des Moduls in eine technische Anlage (90) notwendig sind.

12. System zur Durchführung eines Prozesses mittels einer technischen Anlage (90), aufweisend
a. eine Mehrzahl von Modulen (1) gemäß einem der Ansprüche 1 bis 11, welche Teilprozesse des technischen Prozesses durchführen können;
b. ein Anfragermodul (2), aufweisend eine Außenschnittstelle mit einer Verwaltungsschale (4); und
c. ein Netzwerk (62), welches die Module (1) und das Anfragermodul (2) miteinander verbindet; wobei
d. das Anfragermodul (2) einen Dienst für ein Endprodukt über das Netzwerk (62) bei den Modulen (1) anfragen kann.

13. System gemäß Anspruch 12, wobei das Anfragermodul (2) einen eigenen Zustandsautomaten (3) aufweist; wobei in einem ersten Zustand des Zustandsautomaten (3)
I. das Anfragermodul (2) einen Dienst für ein Endprodukt über das Netzwerk (62) bei den Modulen (1) anfragt;
II. ein erstes Modul (1, D), das den Dienst für das Endprodukt anbietet, mindestens einen Dienst für sein Eingangsprodukt über das Netzwerk (62) bei den anderen Modulen (1, A, B, C, G, K) anfragt;
III. ein zweites Modul (1, C), das den mindestens einen Dienst für das Eingangsprodukt des ersten Moduls als Ausgangsprodukt anbietet, mindestens einen Dienst für sein Eingangsprodukt über das Netzwerk bei den Modulen (1, A, B, G, K) anfragt; und
IV. das Anfragermodul (2) eine Nachricht, dass der Prozess vollständig ist, von einem der Module (1) empfängt;
und wobei der Zustandsautomat (3) des Anfragermoduls (2) in einen zweiten Zustand übergeht, wenn der Prozess vollständig ist, wobei im zweiten Zustand der Prozess gestartet werden kann.

14. System gemäß einem der Ansprüche 12 oder 13, wobei das Anfragermodul (2) in seiner Verwaltungsschale (4) mindestens einen Dienst anbietet, der das Endprodukt beinhaltet.

15. System nach einem der Ansprüche 12 bis 14, wobei ein Modul (1) die Nachricht der Vollständigkeit generiert, wenn jedes seiner für den Prozess notwendigen Eingangsprodukte mit dem Zustand "steht zur Verfügung" an seiner Verwaltungsschale (23) anliegt, und wobei die Nachricht der Vollständigkeit vom generierenden Modul (1) an das Anfragermodul (2) übertragen wird.

16. System nach einem der Ansprüche 12 bis 15, wobei das Anfragermodul (2) eine Recheneinheit (5) aufweist, die eingerichtet ist, eine Bewertung des geplanten Prozesses durchzuführen, wobei das Bewertungsergebnis Voraussetzung zum Übergang vom ersten Zustand des Zustandsautomaten (3) auf den zweiten Zustand des Zustandsautomaten (3) ist.

17. System nach Anspruch 16, wobei die Recheneinheit (5) des Anfragermoduls (2) eingerichtet ist, die Bewertung anhand einer Optimum-Berechnung basierend auf dem technischen Aufwand durchzuführen.

18. Verfahren zur Durchführung eines technischen Prozesses mittels einer technischen Anlage, aufweisend eine Mehrzahl von Modulen (1), mindestens ein Anfragermodul (2) und ein Netzwerk (62), wobei die Module (1) eine technische Hardware (10) zur Durchführung eines technischen Teilprozesses und eine Steuerung (20) zur lokalen Steuerung der technischen Hardware (10) aufweisen, wobei die Steuerung (20) eine Außenschnittstelle (22) aufweist, die eine Verwaltungsschale (23) umfasst, wobei das Verfahren die folgenden Schritte umfasst:
a. Veröffentlichen mindestens eines Dienstes, der auf ein Ausgangsprodukt (140) des jeweiligen Moduls (1) bezogen ist, über das Netzwerk (62) durch die Verwaltungsschale (23) jedes Moduls (1);
b. Anfragen mindestens eines Dienstes, der auf ein Eingangsprodukt (130) des jeweiligen Moduls (1) bezogen ist, über das Netzwerk (62) durch die Außenschnittstelle (22) jedes Moduls (1);
c. Anfragen mindestens eines Dienstes für ein Endprodukt über das Netzwerk (62) durch das Anfragermodul (2);
d. Empfangen einer Nachricht, dass der Prozess vollständig ist, von einem der Module (1) durch das Anfragermodul (2).

19. Verfahren gemäß Anspruch 18, weiterhin aufweisend die folgenden Schritte:
e. Durchführen einer Bewertung des geplanten technischen Prozesses durch eine Recheneinheit (5) des Anfragermoduls (2); und
f. Starten des Prozesses unter Berücksichtigung des Bewertungsergebnisses.

## Claims

1. A module (1) for a technical facility (90) having
a. a technical hardware (10) for carrying out a technical sub-process;
b. a controller (20) for local control of the technical hardware (10), wherein the controller (20) is adapted to control the technical hardware (10) autarkic; and
c. an external interface (22) of the controller (20); wherein
d. the external interface (22) has a management shell (23), wherein the management shell (23) is adapted to publish at least one service via a network (62); **characterized in that**
the at least one service is related to an output product (140) of the module (1); and
e. that the external interface (22) is adapted to request at least one service related to an input product (130) of the module (1) via the network (62).

2. The module according to claim 1, wherein in the management shell (23) the at least one service related to an output product (140) of the module (1) is published by means of standardized meta-information via the network (62).

3. The module according to any one of claims 1 or 2, wherein the external interface (22) is adapted to request the service related to the input product (130) by means of standardized meta-information related to the input product (130) via the network (62).

4. The module according to any one of claims 1 to 3 further comprising a state machine.

5. The module according to claim 4, wherein at least a state of the state machine is published in the management shell (23), and wherein the state of the state machine is dependent on a response to the request for a service related to the input product (130) of the module (1).

6. The module according to any one of claims 1 to 5, wherein the module (1) is adapted:
a. for processing the input product (130) and for outputting the output product (140); and/or
b. for measuring a physical quantity of the input product (130) and/or the output product (140); and/or
c. for physically storing the input product (130) and/or the output product (140).

7. The module according to any one of claims 1 to 6, wherein the technical hardware (10) is configured to generate the output product (140) from the input product (130), and the technical hardware (10) is further configured to modify the input product (130) to generate the output product (140) by,
a. Modification of a chemical composition; and/or
b. Modification of at least one physical property; and/or
c. Addition of material; and/or
d. Removal of material.

8. The module according to any one of claims 1 to 7, wherein the management shell (23) comprises static information about the technical hardware (10) and dynamic information as real-time values of the technical hardware (10), wherein the real-time values are generatable by the controller (20).

9. The module according to claim 8, wherein the controller (20) is adapted to generate the real-time values from
a. Measurement data and/or control data of the technical hardware (10); and/or
b. Communication data transmitted via the external interface; and/or
c. States of the state machine to the service provided by the controller (20) and the technical hardware (10); and/or
d. historical values of measurement data and/or control data of the technical hardware (10) and/or of states of the state machine; and/or
e. an extrapolation of measurement data and/or control data of the technical hardware (10) and/or communication data and/or of states of the state machine.

10. The module according to any one of claims 1 to 9, wherein the external interface (22) has an OPC-UA server (28) that has a fixed predetermined information structure in which the management shell (23) is mapped.

11. The module according to any one of claims 1 to 10, wherein the management shell (23) maps information in the structure of a Module Type Package that contains in structured form all information that are necessary for the integration of the module into a technical facility (90).

12. A system for carrying out a process by means of a technical facility (90), comprising
a. a plurality of modules (1) according to any one of claims 1 to 11, which can perform sub-processes of the technical process;
b. a requester module (2) having an external interface with a management shell (4); and
c. a network (62) connecting the modules (1) and the requestor module (2); wherein
d. the requestor module (2) can request a service for a final product via the network (62) at the modules (1).

13. The system according to claim 12, wherein the requestor module (2) has an own state machine (3); wherein in a first state of the state machine (3)
I. the requestor module (2) requests a service for a final product via the network (62) at the modules (1);
II. a first module (1, D), which offers the service for the final product, requests at least one service for its input product via the network (62) at the other modules (1, A, B, C, G, K);
III. a second module (1, C), which offers the at least one service for the input product of the first module as output product, requests at least one service for its input product via the network at the modules (1, A, B, G, K); and
IV. the requestor module (2) receives a message that the process is complete from one of the modules (1);
and wherein the state machine (3) of the requestor module (2) transitions to a second state when the process is complete, wherein in the second state the process can be started.

14. The system according to any one of claims 12 or 13, wherein the requestor module (2) offers in its management shell (4) at least one service that includes the final product.

15. The system according to any one of claims 12 to 14, wherein a module (1) generates the message of completeness when each of its input products necessary for the process is present at its management shell (23) with the state "is available", and wherein the message of completeness is transmitted from the generating module (1) to the requestor module (2).

16. The system according to any one of claims 12 to 15, wherein the requestor module (2) has a computing unit (5) which is adapted to perform an evaluation of the planned process, wherein the evaluation result is a prerequisite for the transition from the first state of the state machine (3) to the second state of the state machine (3).

17. The system according to claim 16, wherein the computing unit (5) of the requestor module (2) is adapted to perform the evaluation using an optimum calculation based on the technical effort.

18. A method for performing a technical process by means of a technical facility having a plurality of modules (1), at least one requester module (2), and a network (62), wherein the modules (1) have a technical hardware (10) for performing a technical sub-process and a controller (20) for locally controlling the technical hardware (10), wherein the controller (20) has an external interface (22) which comprises a management shell (23), wherein the method comprises the following steps:
a. Publishing of at least one service related to an output product (140) of the respective module (1) via the network (62) by the management shell (23) of each module (1);
b. Requesting of at least one service related to an input product (130) of the respective module (1) via the network (62) through the external interface (22) of each module (1);
c. Requesting of at least one service related to a final product via the network (62) by the requestor module (2);
d. Receiving of a message that the process is complete from one of the modules (1) by the requestor module (2).

19. The method according to claim 18, further comprising the following steps:
e. Performing an evaluation of the planned technical process by a computing unit (5) of the requestor module (2); and
f. Starting the process taking into account the evaluation result.

## Revendications

1. Module (1) pour une installation technique (90) comprenant
a. un matériel technique (10) pour réaliser un sous-processus technique ;
b. une commande (20) pour la commande locale du matériel technique (10), la commande (20) étant agencée pour commander le matériel technique (10) de manière autonome ; et
c. une interface extérieure (22) de la commande (20) ;
d. l'interface extérieure (22) comportant une enveloppe d'administration (23), l'enveloppe d'administration (23) étant agencée pour publier au moins un service par l'intermédiaire d'un réseau (62) ;
**caractérisé en ce que** le au moins un service est en rapport avec un produit sortant (140) du module (1), et
e. **en ce que** l'interface extérieure (22) est agencée pour demander par l'intermédiaire du réseau (62) un service en rapport avec un produit entrant (130) du module (1).

2. Module selon la revendication 1, dans lequel dans l'enveloppe d'administration (23) le au moins un service en rapport avec un produit sortant (140) du module (1) est publié par l'intermédiaire du réseau (62) au moyen de méta-informations normalisées.

3. Module selon une des revendications 1 ou 2, dans lequel l'interface extérieure (22) est agencée pour demander le service en rapport avec le produit entrant (130) par l'intermédiaire du réseau (62) au moyen de méta-informations normalisées en rapport avec le produit entrant (130).

4. Module selon une des revendications 1 à 3, comprenant en outre un automate d'état.

5. Module selon la revendication 4, dans lequel au moins un état de l'automate d'état est publié dans l'enveloppe d'administration (23), l'état de l'automate d'état étant dépendant d'une réponse à la demande d'un service en rapport avec le produit entrant (130) du module (1).

6. Module selon une des revendications 1 à 5, dans lequel le module (1) est agencé :
a. pour traiter le produit entrant (130) et pour sortir le produit sortant (140) ; et/ou
b. pour mesurer une grandeur physique du produit entrant (130) et/ou du produit sortant (140) ; et/ou
c. pour le stockage physique du produit entrant (130) et/ou du produit sortant (140).

7. Module selon une des revendications 1 à 6, dans lequel le matériel technique (10) est conçu pour générer le produit sortant (140) à partir du produit entrant (130), et le matériel technique (10) est conçu en outre pour modifier le produit entrant (130) afin de générer le produit sortant (140) en
a. modifiant une composition chimique ; et/ou en
b. modifiant au moins une propriété physique ; et/ou en
c. ajoutant de la matière ; et/ou en
d. enlevant de la matière.

8. Module selon une des revendications 1 à 7, dans lequel l'enveloppe d'administration (23) inclut des informations statiques sur le matériel technique (10) et des informations dynamiques sous forme de valeurs en temps réel du matériel technique (10), les valeurs en temps réel pouvant être générées par la commande (20).

9. Module selon la revendication 8, dans lequel la commande (20) est agencée pour générer les valeurs en temps réel à partir
a. de données de mesure et/ou de données de commande du matériel technique (10) ; et/ou
b. de données de communication transmises par l'intermédiaire de l'interface extérieure ; et/ou
c. d'états de l'automate d'état par rapport au service fourni par l'intermédiaire de la commande (20) et du matériel technique (10) ; et/ou
d. de valeurs historiques de données de mesure et/ou de données de commande du matériel technique (10) et/ou d'états de l'automate d'état ; et/ou
e. d'une extrapolation de données de mesure et/ou de données de commande du matériel technique (10) et/ou de données de communication et/ou d'états de l'automate d'état.

10. Module selon une des revendications 1 à 9, dans lequel l'interface extérieure (22) comporte un serveur OPC-UA (28) qui comporte une structure d'information prescrite de manière fixe dans laquelle l'enveloppe d'administration (23) est représentée.

11. Module selon une des revendications 1 à 10, dans lequel l'enveloppe d'administration (23) représente une information dans la structure d'un *Module Type Package* qui contient sous forme structurée toutes les informations qui sont nécessaires à l'intégration du module dans une installation technique (90).

12. Système de mise en œuvre d'un processus au moyen d'une installation technique (90), comprenant
a. une pluralité de modules (1) selon une des revendications 1 à 11, lesquels peuvent réaliser des sous-processus du processus technique ;
b. un module de demande (2) comportant une interface extérieure avec une enveloppe d'administration (4) ; et
c. un réseau (62) qui relie les modules (1) et le module de demande (2) entre eux ;
d. le module de demande (2) pouvant demander auprès des modules (1) un service pour un produit final par l'intermédiaire du réseau (62) .

13. Système selon la revendication 12, dans lequel le module de demande (2) comporte un automate d'état propre (3) ; dans lequel, dans un premier état de l'automate d'état (3)
I. le module de demande (2) demande aux modules (1) un service pour un produit final par l'intermédiaire du réseau (62) ;
II. un premier module (1, D), qui offre le service pour le produit final, demande aux autres modules (1, A, B, C G, K) au moins un service pour son produit entrant par l'intermédiaire du réseau (62) ;
III. un second module (1, C), qui offre le au moins un service pour le produit entrant du premier module comme produit sortant, demande aux modules (1, A, B, G, K) au moins un service pour son produit entrant par l'intermédiaire du réseau ; et
IV. le module de demande (2) reçoit d'un des modules (1) un message selon lequel le processus est complet ;
et dans lequel l'automate d'état (3) du module de demande (2) passe dans un second état lorsque le processus est complet, le processus pouvant être lancé dans le second état.

14. Système selon une des revendications 12 ou 13, dans lequel le module de demande (2) offre dans son enveloppe d'administration (4) au moins un service qui contient le produit final.

15. Système selon une des revendications 12 à 14, dans lequel un module (1) génère le message de complétude lorsque chacun de ses produits entrants nécessaires au processus est présent au niveau de son enveloppe d'administration (23) avec l'état "à disposition", et dans lequel le message de complétude est transmis du module générateur (1) au module de demande (2).

16. Système selon une des revendications 12 à 15, dans lequel le module de demande (2) comporte une unité de calcul (5) qui est agencée pour réaliser une évaluation du processus planifié, le résultat d'évaluation étant une condition du passage du premier état de l'automate d'état (3) au second état de l'automate d'état (3).

17. Système selon la revendication 16, dans lequel l'unité de calcul (5) du module de demande (2) est agencée pour réaliser l'évaluation à l'aide d'un calcul d'optimum sur la base de la mise en œuvre technique.

18. Procédé de réalisation d'un processus technique au moyen d'une installation technique, comprenant une pluralité de modules (1), au moins un module de demande (2) et un réseau (62), les modules (1) comportant un matériel technique (10) pour réaliser un sous-processus technique et une commande (20) pour la commande locale du matériel technique (10), la commande (20) comportant une interface extérieure (22) qui inclut une enveloppe d'administration (23), dans lequel le procédé inclut les étapes suivantes :
a. publication d'au moins un service, qui est en rapport avec un produit sortant (140) du module respectif (1), par l'intermédiaire du réseau (62) à travers l'enveloppe d'administration (23) de chaque module (1) ;
b. demande d'au moins un service, qui est en rapport avec un produit entrant (130) du module respectif (1), par l'intermédiaire du réseau (62) à travers l'interface extérieure (22) de chaque module (1) ;
c. demande d'au moins un service pour un produit final par l'intermédiaire du réseau (62) à travers le module de demande (2) ;
d. réception d'un message, selon lequel le processus est complet, depuis un des modules (1) à travers le module de demande (2).

19. Procédé selon la revendication 18, comprenant en outre les étapes suivantes :
e. réalisation d'une évaluation du processus technique planifié par l'intermédiaire d'une unité de calcul (5) du module de demande (2) ; et
f. lancement du processus en tenant compte du résultat d'évaluation.
